# EUROPÄISCHE PATENTANMELDUNG

(11) **EP 0 869 504 A1**
(43) Veröffentlichungstag der Anmeldung: **07.10.1998**
(21) Anmeldenummer: 98103863.1
(22) Anmeldetag: 05.03.1998
(51) Int. Cl.: G11B 33/04

(54) **Tasche aus Kunststoff zur Aufnahme einer Compact-Disc**

(30) Priorität: 01.04.1997 DE 29705733 U
(71) Anmelder: Deja-Accessoires GmbH, D-51427 Bergisch Gladbach (DE)
(72) Erfinder: Deja, Günter, 51491 Overath (DE)
(74) Vertreter: Langmaack, Jürgen, Dipl.-Ing.

(57) **Zusammenfassung**

Die Erfindung betrifft eine Tasche aus einer Kunststoffolie für wenigstens eine Compact-Disc mit einem eine Fläche der aufzunehmenden Compact-Disc (2) vollständig überdeckenden Basisteil (3), einem die andere Fläche der Compact-Disc (2) teilweise überdeckenden Taschenteil (4), das mit dem Basisteil (3) entlang einer Grundkante (5) sowie entlang der beiden an die Grundkante (5) angrenzenden Seitenkanten (6) verbunden ist, und mit einer Deckellasche (9), die mit einer zur Grundkante (5) parallelen Scharnierkante (10) des Basisteils (3) verbunden ist, die sich bis über den Mittenbereich (8) der Compact-Disc (2) erstreckt und die mit einer Haltezunge (12) versehen ist, die bei übergelegter Deckellasche (9) in die Mittenausnehmung (8) der aufgenommenen Compact-Disc (2) einschiebbar ist.

## Beschreibung

Compact-Discs, nachstehend CD bezeichnet, werden üblicherweise in Kassetten aus Hartkunststoff, beispielsweise Polystyrol oder dergleichen, aufbewahrt. Darüber hinaus sind für die Nutzung von CD's im Zusammenhang mit mobilen Abspielgeräten in Form von tragbaren Geräten oder auch in Kraftfahrzeugen ziehharmonikaartige Taschen aus textilem Material bekannt.

Mit der weiteren Verbreitung von CD's als Daten- oder Tonträger haben sich Anwendungsfälle ergeben, bei denen die CD's nur selten benötigt werden, so daß die herkömmlichen Aufbewahrungsmöglichkeiten durch Kassetten nicht nur kostspielig sondern auch platzaufwendig sind.

Der Erfindung liegt die Aufgabe zugrunde, eine kostengünstige Transport- und Aufbewahrungsmöglichkeit für CD's zu schaffen, die jedoch die "aktive" Fläche der CD hinreichend schützt.

Diese Aufgabe wird gemäß der Erfindung gelöst duch eine Tasche aus einer Kunststoffolie für wenigstens eine CD mit einem eine Fläche der aufzunehmenden vollständig überdeckenden Basisteil, einem die andere Fläche der CD wenigstens teilweise überdeckenden Taschenteil, das mit dem Basisteil entlang einer Grundkante sowie entlang der beiden an die Grundkante angrenzenden Seitenkanten verbunden ist, und mit einer Deckellasche, die mit einer zur Grundkante parallelen Scharnierkante des Basisteils verbunden ist, die sich bis über den Mittenbereich der CD erstreckt und die mit einer Haltezunge versehen ist, die bei übergelegter Deckellasche in die Mittenausnehmung der aufgenommenen CD einschiebbar ist. Eine derart ausgebildete Tasche hat den Vorteil, daß sie zum einen kostengünstig herstellbar ist, zum anderen über eine entsprechende Wahl der Foliendicke eine eingelegte CD gegen äußere mechanische Einwirkungen schützt sowie durch die Anordnung der in die Mittenausnehmung einschiebbaren Haltezunge einen sicheren Verschluß der Tasche bietet.

In vorteilhafter Ausgestaltung der Erfindung ist vorgesehen, daß der Taschenteil höchstens die Hälfte der CD überdeckt. Diese Ausgestaltung bietet den Vorteil, daß zum einen der Materialverbrauch für die Erstellung der Tasche erheblich reduziert wird und zum anderen, daß zur Entnahme der CD bei geöffneter Deckellasche diese mit Daumen und Zeigefinger in der Mittenausnehmung und am Rand erfaßt und praktisch berührungslos aus dem Taschenteil entnommen werden kann.

In besonders zweckmäßiger Ausgestaltung der Erfindung ist vorgesehen, daß die Haltezunge aus dem Material der Deckellasche ausgestanzt ist. Die Haltezunge bildet somit ein in die Deckellasche integriertes Bauteil. Besonders zweckmäßig ist es hierbei, wenn in weiterer Ausgestaltung der Erfindung das freie Ende der Haltezunge gegen die Scharnierkante gerichtet ist. Diese Anordnung hat den Vorteil, daß die im Taschenteil befindliche CD die in die Mittenausnehmung der CD eingeschobene Haltezunge der Deckellasche gegen die Öffnungsrichtung "bekneift", so daß ein sicherer mechanischer Verschluß gegeben ist.

In Ausgestaltung der Erfindung ist vorgesehen, daß das Basisteil, der Taschenteil und die Deckellasche einstückig aus einem Folienabschnitt hergestellt sind.

In einer anderen Ausgestaltung der Erfindung ist vorgesehen, daß zumindest der Taschenteil als gesonderter Folienabschnitt mit dem Basisteil verbunden ist, vorzugsweise verschweißt ist.

In der Ausgestaltung der Erfindung ist es möglich, daß das Basisteil auf beiden Flächenseiten jeweils mit einem Taschenteil und einer Deckellasche versehen ist. Damit ist die Möglichkeit gegeben, zwei zusammengehörige CD's in einem Aufbewahrungselement unterzubringen. Diese Ausführungsform erfordert jedoch, daß sowohl die beiden Taschenteile als auch die beiden Deckellaschen als gesonderte Folienabschnitte mit dem Basisteil verbunden werden.

In weiterer vorteilhafter Ausgestaltung der Erfindung ist vorgesehen, daß am Basisteil an einer Seitenkante ein Halteelement angeordnet ist. Das Halteelement kann aus einem Kunststoff-Folienstreifen mit etwas höherer Festigkeit bestehen, so daß hier Ausstanzungen für eine Heftmechanik in Form von Löchern oder auch hakenförmigen Einschnitten vorgesehen werden können. Damit ist es möglich, die erfindungsgemäßen Taschen auch in Buchform auswechselbar anzubieten. Über das Halteelement ist es auch möglich, mehrere derartige Taschen fest in einer buchförmigen Aufnahmeeinrichtung anzubieten, wobei über die Halteelemente die Möglichkeit gegeben ist, die einzelnen Taschen "umzublättern".

Die Erfindung wird anhand schematischer Zeichnungen von Ausführungsbeispielen näher erläutert. Es zeigen:
- Fig. 1: eine Aufsicht auf eine Tasche mit geöffneter Deckellasche,
- Fig. 2: einen Schnitt gemäß der Linie II-II in Fig. 1,
- Fig. 3: eine Aufsicht auf die Tasche gemäß Fig. 1 mit geschlossener Deckellasche,
- Fig. 4: die Ausführungsform entsprechend Fig. 3 mit einem seitlichen Halteelement,
- Fig. 5: einen Schnitt entsprechend Fig. 2 für eine Taschenausführungsform mit zwei Taschenteilen und zwei Deckellaschen.

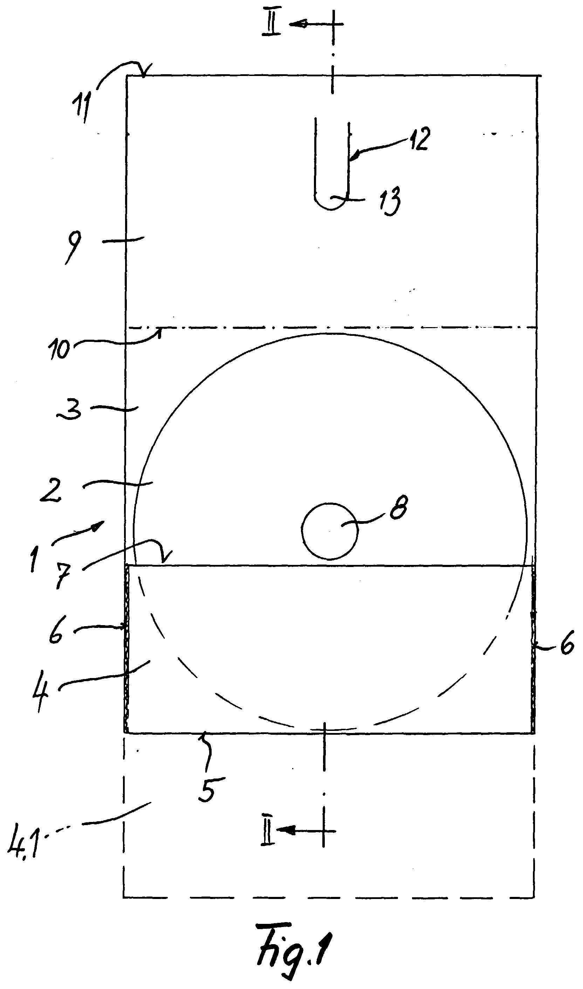

Wie Fig. 1 und Fig. 2 erkennen lassen, besteht diese Ausführungsform für eine Tasche zur Aufnahme einer CD im wesentlichen aus einem einstückigen Folienabschnitt 1, der einen, die aufzunehmende CD 2 vollständig überdeckenden Basisteil 3 und einen die aufzunehmende CD 2 nur teilweise überdeckenden Taschenteil 4 aufweist. Der Taschenteil 4 ist aus der mit 4.1 gestrichelt angedeuteten gestreckten Lage des Folienabschnittes 1 durch Faltung entlang einer Grundkante 5 in die in Fig. 1 voll ausgezogene Endstellung umgelegt und entlang der beiden an die Grundkante 5 angrenzenden Seitenkanten 6 mit dem Basisteil 3 verschweißt. Die freie Kante 7 des Taschenteils 4 ist nun so bemessen, daß sie bis höchstens an die Mitte der Mittenausnehmung 8 der CD 2 heranreicht.

Mit dem Basisteil 3 ist - ebenfalls einstückig - eine Deckellasche 9 verbunden, die entlang einer Scharnierkante 10, die bei der Herstellung der Tasche vorgeprägt sein kann, fest verbunden. Die Deckellasche 9 kann, wie Fig. 3 erkennen läßt, in Richtung auf den Taschenteil 4 umgelegt werden, wobei sie in ihrer Länge so bemessen ist, daß die freie Kante 11 der Deckellasche 9 die freie Kante 7 des Taschenteils 4 überdeckt.

In der Deckellasche 9 ist in Form einer Ausstanzung eine Haltezunge 12 eingearbeitet, deren freies Ende 13 gegen die Scharnierkante 10 gerichtet ist.

Wird - wie in Fig. 3 dargestellt - die Deckellasche 9 auf die CD 2 umgelegt, dann kann das freie Ende 13 der Haltezunge 12 in die Mittenausnehmung 8 der eingelegten CD 2 eingschoben werden. Damit ist die Deckellasche 9 gesichert, wobei die eingelegte CD 2 die durch ihre Mittenausnehmung 8 eingeschobene Haltezunge 12 "bekneift". Damit ist sichergestellt, daß bei einem Hochschieben der Deckellasche 9 in Richtung des Pfeiles 14 (Fig. 3) die als Verriegelung der Deckellasche 9 dienende Haltezunge 12 nicht aus der Mittenausnehmung 8 der CD 2 herausgezogen werden kann, sondern, im Gegenteil, tiefer eingeschoben wird, da die Tasche insgesamt aus einem flexiblen Folienmaterial hergestellt ist. Dies ist insbesondere dann von Bedeutung, wenn mehrere derartiger Taschen übereinanderliegend angeordnet werden, da sich durch die spezielle Anordnung der Haltezunge 12 bei einer Relativverschiebug mehrerer Taschen gegeneinander die Deckellaschen nicht öffnen. Zum Öffnen der Deckellasche ist es erforderlich, die freie Kante 11 hochzubiegen, so daß dann die Haltezunge 12 aus der Mittenausnehmung 8 herausgezogen werden kann.

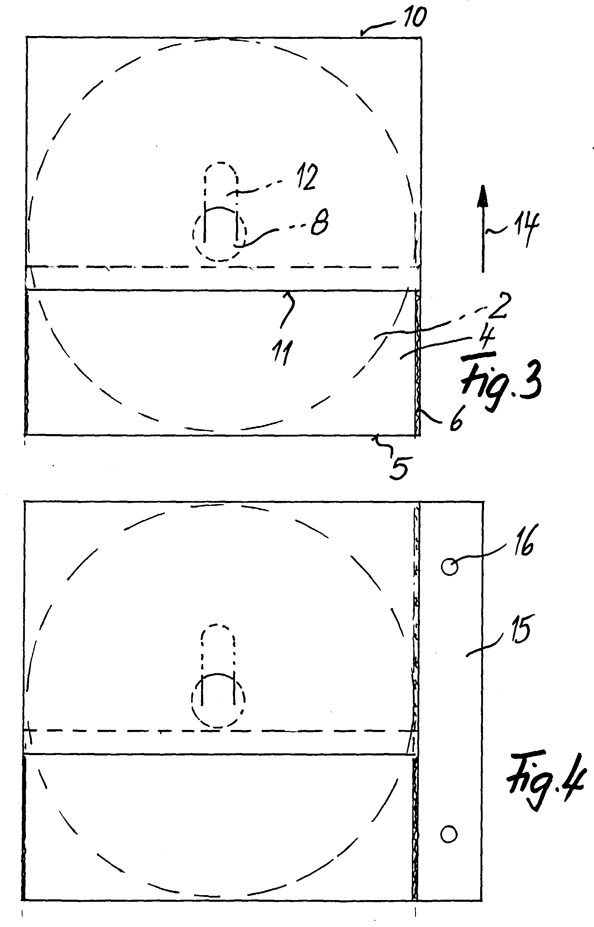

Wie Fig. 4 erkennen läßt, kann an einer Seitenkante ein Halteelement 15 angeordnet, beispielsweise mit dem Basisteil verschweißt sein, das durch einen stärkeren Folienstreifen gebildet wird und das mit lochförmigen oder auch hakenförmigen Ausstanzungen 16 versehen ist, so daß die Tasche insgesamt in einen Ordner- oder in einen Klemmbuch- oder Schraubbuchrücken eingebracht werden kann. Die einzelnen Taschen können dann buchartig umgeblättert werden.

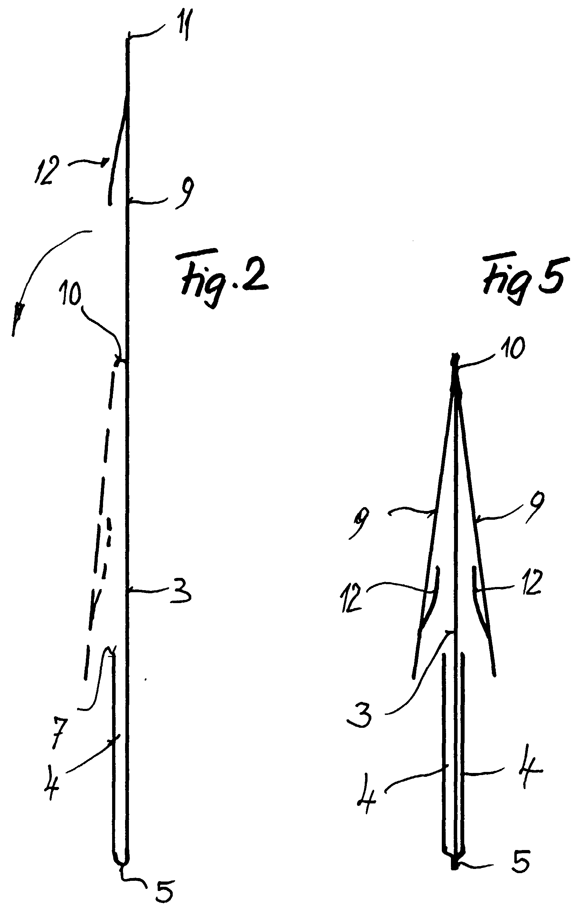

Fig. 5 läßt in einem Schnitt entsprechend Fig. 2 erkennen, daß mit dem Basisteil 3 der Taschenteil 4 sowie die Deckellasche 9 auch durch Verschweißen entlang der Grundkante 5 und der Scharnierkante 10 miteinander verbunden werden können. Bei dieser Ausführungsform bestehen Basisteil 3, Taschenteil 4 und Deckellasche 9 aus einzelnen Folienabschnitten oder einzelnen Folienbahnen, die entsprechend miteinander verschweißt werden.

Die geschweißte Ausführungsform gemäß Fig. 5 erlaubt es auch, mit einem Basisteil 3 zwei Taschenteile und zwei Deckellaschen zu verbinden, so daß die Anordnung auch in Form einer Doppeltasche zur Aufnahme von zwei CD's herstellbar ist. Bei dieser Ausführungsform ist es möglich, den Basisteil 3 aus einem Folienmaterial herzustellen, das eine etwas größere Folienstärke und damit eine etwas höhere Steifigkeit aufweist.

## Patentansprüche

1. Tasche aus einer Kunststoffolie für wenigstens eine Compact-Disc mit einem eine Fläche der aufzunehmenden Compact-Disc (2) vollständig überdeckenden Basisteil (3), einem die andere Fläche der Compact-Disc (2) teilweise überdeckenden Taschenteil (4), das mit dem Basisteil (3) entlang einer Grundkante (5) sowie entlang der beiden an die Grundkante (5) angrenzenden Seitenkanten (6) verbunden ist, und mit einer Deckellasche (9), die mit einer zur Grundkante (5) parallelen Scharnierkante (10) des Basisteils (3) verbunden ist, die sich bis über den Mittenbereich (8) der Compact-Disc (2) erstreckt und die mit einer Haltezunge (12) versehen ist, die bei übergelegter Deckellasche (9) in die Mittenausnehmung (8) der aufgenommenen Compact-Disc (2) einschiebbar ist.

2. Tasche nach Anspruch 1, dadurch gekennzeichnet, daß der Taschenteil (4) höchstens die Hälfte der Compact-Disc (2) überdeckt.

3. Tasche nach Anspruch 1 oder 2, dadurch gekennzeichnet, daß die Haltezunge (12) aus dem Material der Deckellasche (9) ausgestanzt ist.

4. Tasche nach einem der Ansprüche 1 bis 3, dadurch gekennzeichnet, daß das freie Ende (13) der Haltezunge (12) gegen die Scharnierkante (10) gerichtet ist.

5. Tasche nach einem der Ansprüche 1 bis 4, dadurch gekennzeichnet, daß Basisteil (3), Taschenteil (4) und Deckellasche (9) einstückig aus einem Folienabschnitt hergestellt sind.

6. Tasche nach einem der Ansprüche 1 bis 4, dadurch gekennzeichnet, daß zumindest der Taschenteil (4) als gesonderter Folienabschnitt mit dem Basisteil (3) verbunden ist, vorzugsweise verschweißt.

7. Tasche nach einem der Ansprüche 1 bis 6, dadurch gekennzecihnet, daß das Basisteil (3) auf beiden Flächenseiten jeweils mit einem Taschenteil (4) und einer Deckellasche (9) versehen ist.

8. Tasche nach einem der Ansprüche 1 bis 7, dadurch gekennzeichnet, daß am Basisteil (3) an einer Seitenkante (6) ein Halteelement (15) angeordnet ist.
